# EUROPÄISCHE PATENTSCHRIFT

(11) **EP 2 434 249 B1**
(45) Veröffentlichungstag und Bekanntmachung des Hinweises auf die Patenterteilung: **01.05.2013**
(21) Anmeldenummer: 10010233.4
(22) Anmeldetag: 22.09.2010
(51) Int. Cl.: F41H 5/013, F41H 5/04, B32B 17/10

(54) **Panzerglasscheibe mit Randverstärkung**
Reinforced glass pane with reinforced edges
Vitre blindée dotée d'un renforcement au bord

(43) Veröffentlichungstag der Anmeldung: 28.03.2012
(73) Patentinhaber: ISOCLIMA S.p.A., 35042 Este (IT)
(72) Erfinder: Stranner, Siegfried, 81241 München (DE)
(74) Vertreter: Seitz, Ralf Hans Frank

(56) Entgegenhaltungen:
- EP-A2- 1 010 963
- DE-A1- 10 244 368
- DE-U1-202007 001 565

## Beschreibung

Die vorliegende Erfindung betrifft eine Panzerglasscheibe mit einer Randverstärkung gemäß dem Oberbegriff von Anspruch 1.

Eine solche Panzerglasscheibe ist in DE 102 44 368 A1 beschrieben. Diese Panzerglasscheibe für gepanzerte Fahrzeuge hat mehrere schichtweise angeordnete Glasscheiben mit dazwischen liegenden Verbundschichten und eine beschußhemmende Randverstärkung, die sich in Umfangsrichtung der bekannten Panzerglasscheibe erstreckt und umlaufend als Rahmen ausgebildet sein kann. Die bekannte Randverstärkung kann auch aus mehreren, leistenförmigen Einzelteilen oder Gliedern ausgebildet sein, die an der Panzerglasscheibe lückenlos aneinander gereiht sein können. Die bekannte Randverstärkung kann aber auch nur an einem Seitenrandbereich oder mehreren Seitenrandbereichen der Panzerglasscheibe vorgesehen sein.

In DE 20 2007 001 565 U1 ist eine Panzerungsscheibe zur Verwendung als bewegbare Seitenscheibe eines Kraftfahrzeugs mit mehreren schichtweise angeordneten Scheiben und Verbundschichten beschrieben, wobei mindestens eine Verbundschicht zwischen jeweils zwei aufeinanderfolgenden Scheiben angeordnet ist, um die beiden Scheiben zu verbinden. Weiterhin sind eine Abstufung, die am Umfangsrand der bekannten Panzerungsscheibe ausgebildet ist und einen Vorsprung zum Eingriff der Panzerungsscheibe in einem Rahmen oder Türrahmen hat, und eine Randverstärkung vorgesehen, die zumindest die innenliegende Oberfläche des Vorsprungs abdeckt. Im Bereich der Abstufung ist zudem eine Vertiefung an der Umfangsseite des Panzerungsscheibe ausgebildet, in die sich die Randverstärkung hinein erstreckt, die als ebener Streifen, als ebener, am Rand der Panzerungsscheibe umlaufender Rahmen oder Rahmenabschnitt ausgebildet sein kann.

Eine Panzerglasscheibe ist z.B. auch in EP 1 010 963 B1 beschrieben. Diese Panzerglasscheibe ist als Verbundglasscheibe mit mehreren Glasscheiben und zwischenliegenden Verbundschichten aus Kunststoff, z.B. Polyurethan, aufgebaut. Am Außenrand oder Umfang der bekannten Panzerglasscheibe befindet sich ein Vorsprung mit innenliegender Abstufung. An der Innenseite des Vorsprungs ist eine randseitig umlaufende Randverstärkung als Verbundteil integriert, die einen rechteckigen Querschnitt hat und an der in das Fahrzeuginnere weisenden Fläche des Vorsprungs angeordnet ist. Diese Randverstärkung ist als geschweißter oder gestanzter Rahmen ausgebildet und besteht z.B. aus Metall oder rostfreiem Stahl. Die metallene Randverstärkung unterliegt relativ hohen temperaturabhängigen Längenänderungen, die sogar zu einer Rißbildung, einer Absplitterung oder einer anderen Beschädigung der Panzerglasscheibe im Randbereich führen können.

Aufgabe der vorliegenden Erfindung ist es deshalb, eine Panzerglasscheibe mit einer Randverstärkung anzugeben, die ausgelegt ist, einer Beschädigung der Panzerglasscheibe aufgrund von Temperaturänderungen vorzubeugen.

Diese Aufgabe wird durch die Panzerglasscheibe mit Randverstärkung gemäß Anspruch 1 gelöst. Demnach ist die erfindungsgemäße Panzerglasscheibe zur Verwendung in einem Kraftfahrzeug mit mehreren in einem Verbund schichtweise flächig miteinander verbundenen Scheiben und Schichten aus Glas, Keramik oder Kunststoff und mit einer Randverstärkung aufgebaut, die sich an einem Umfang der Panzerglasscheibe erstreckt und mindestens zwei Verstärkungsglieder aufweist, welche zum Ausbilden der Randverstärkung an ihren jeweiligen benachbarten Enden in Umfangsrichtung der Panzerglasscheibe beweglich zueinander bzw. lose in einem gegenseitigen Eingriff sind.

Dieser lose gekoppelte Aufbau der Randverstärkung der erfindungsgemäßen Panzerglasscheibe hat den entscheidenden Vorteil, dass eine ausreichende Relativbewegung benachbarter Verstärkungsglieder zueinander ermöglicht wird, wodurch unvermeidliche Abmessungs- und Längenänderungen aufgrund von Temperaturschwankungen ohne Beschädigung der Scheibenstruktur stattfinden können. Unter einem losen, gegenseitigen Eingriff wird im Zusammenhang mit der Erfindung verstanden, dass die Verstärkungsglieder nicht miteinander fest, z.B. durch Schrauben oder Schweißen, verbunden sind, sondern relativ zueinander beweglich sind.

Zudem trägt die Erfindung dazu bei, die Herstellung oder Montage von Panzerglasscheiben mit Randverstärkung zu vereinfachen, da eine Ausrichtung der Rahmenteile oder Randverstärkungsteile durch den gegenseitigen Eingriff der Verstärkungsglieder ineinander beim Zusammenbau und bei der Anordnung der Randverstärkung an dem Panzerglas bei der Panzerglasscheibenherstellung gegeben ist.

Bevorzugt greifen die Enden von jeweils zwei zueinander benachbarten Verstärkungsgliedern der Randverstärkung derart ineinander ein, dass sie relativ zueinander beweglich sind und sich überlappen. Aufgrund des gegenseitigen Endeingriffs kann eine gewünschte Ausrichtung und Anordnung der Verstärkungsglieder innerhalb der Randverstärkung erreicht werden.

Bei der Randverstärkung der Panzerglasscheibe der Erfindung kann von benachbarten Verstärkungsgliedern das Ende des einen Verstärkungsglieds mit einer Aufnahme oder mehreren Aufnahmen versehen sein und das Ende des anderen Verstärkungsglieds mit einem Vorsprung oder mehreren Vorsprüngen versehen sein, der(die) in die Aufnahme(n) paßt(passen). Durch dieses Aufnahme/Vorsprung-System kann eine ausreichende Überlappung der Verstärkungsglieder sichergestellt werden und damit auch die gewünschte Festigkeit und Stabilität der Randverstärkung bei Beschuß oder Schlagbelastung erreicht werden.

Die Aufnahme oder Aufnahmen und dazu passend auch der Vorsprung bzw. die Vorsprünge der Verstärkungsglieder können konisch ausgebildet sein. Hierdurch kann eine Selbstzentrierung oder Ausrichtung der Verstärkungsglieder bei einer Relativbewegung der Verstärkungsglieder der Randverstärkung zueinander aufgrund von Temperaturänderungen erzielt werden.

Bevorzugt sind die Enden von jeweils zwei zueinander benachbarten Verstärkungsgliedern der Randverstärkung nach Art eines Feder-Nut-Systems in einem gegenseitigen Eingriff, wobei das Ende des einen Verstärkungsglieds mit einer Nut oder mehreren Nuten versehen ist und das Ende des anderen, benachbarten oder anschließenden Verstärkungsglieds mit einer Feder oder mehreren Federn versehen ist, die in die Nut(en) einpaßt(einpassen).

Die Enden von jeweils zwei zueinander benachbarten Verstärkungsgliedern der Randverstärkung könne auch nach Art eines Steckersystems in einem gegenseitigen Eingriff oder zusammengesteckt sein, wobei das Ende des einen Verstärkungsglieds mit einer Steckaufnahme oder mehreren Steckaufnahmen versehen ist und das Ende des anderen, benachbarten oder anschließenden Verstärkungsglieds mit einem Steckglied oder mehreren Steckgliedern versehen ist, das bzw. die als Vorsprung oder Vorsprünge in die zugeordneten Aufnahm(en) einpaßt bzw. einpassen.

Dabei kann ein Verstärkungsglied der Randverstärkung an jedem seiner Enden mit jeweils einem Vorsprung oder einer Feder versehen sein oder ein Verstärkungsglied der Randverstärkung kann an jedem seiner Enden mit jeweils einer Aufnahme oder einer Nut versehen sein. In einer anderen Ausführungsform der Erfindung kann ein Verstärkungsglied der Randverstärkung an einem Ende mit einem Vorsprung oder einer Feder und an dem anderen Ende mit einer Aufnahme oder einer Nut versehen sein. Es ist auch möglich, dass ein Verstärkungsglied der Randverstärkung an einem Ende mit einem Vorsprung oder einer Feder versehen ist und an dem anderen Ende als Blindstück ausgebildet ist oder dass ein Verstärkungsglied der Randverstärkung der Erfindung an einem Ende mit einer Aufnahme oder einer Nut versehen ist und an dem anderen Ende als Blindstück ausgebildet ist. Ein Verstärkungsglied kann an einem Ende aber auch mit einem Vorsprung oder mehreren Vorsprüngen und/oder mit einer Aufnahme oder mehreren Aufnahmen versehen sein. Die unterschiedlichen Ausbildungen der Enden der Verstärkungsglieder ermöglichen eine große Vielfalt bei der Realisierung von Randverstärkungen für Panzerglasscheiben.

Die ineinandergreifenden Enden von zwei benachbarten Verstärkungsgliedern der Randverstärkung können sich einander zugewandte, freiliegende, ebene Anschlagflächen haben, die sich parallel zu einer Querschnittsfläche der Verstärkungsglieder oder der Randverstärkung erstrecken und aneinander anschlagen, wenn die beiden benachbarten Verstärkungsglieder vollständig in Eingriff sind.

Die Randverstärkung der Panzerglasscheibe der Erfindung kann Verstärkungsglieder aus Metall, insbesondere aus rostfreiem Stahl, und/oder aus einem Keramikmaterial, insbesondere AlON, haben.

Die Randverstärkung oder jedes Verstärkungsglied der Randverstärkung kann außer an den Koppelenden im Wesentlichen einen rechteckigen Querschnitt, einen winkelförmigen oder L-förmigen Querschnitt oder einen T-förmigen Querschnitt haben.

Die Panzerglasscheibe hat bevorzugt eine Abstufung im Randbereich mit einem Vorsprung, der durch einen Teil einer Glasscheibe, die über die anderen Glasscheiben mit dem Teil hervorsteht, und durch zumindest einen Teil der Randverstärkung ausgebildet ist. Der Vorsprung ist in der Regel dafür vorgesehen, in die Öffnung einer Fahrzeugkarosserie einzugreifen und die Panzerglasscheibe in der Karosserie festzuhalten oder zu befestigen.

Die Randverstärkung kann die innenliegende Oberfläche des Vorsprungs der Panzerglasscheibe vollständig oder zumindest teilweise abdecken, um die ballistischen und durchschlaghemmenden Eigenschaften der Panzerglasscheibe zu verbessern.

Die Randverstärkung kann auf einer randseitigen Stirnseite oder an einer Umfangsfläche der Panzerglasscheibe befestigt sein und die Stirnseite oder Umfangsfläche zumindest teilweise oder vollständig abdecken, um einer Einsplitterung der Panzerglasscheibe ins Fahrzeuginnere im Fall eines Beschusses oder eines Schlags von außen vorzubeugen.

Die Feder oder der Vorsprung eines Verstärkungsglieds kann konisch sein und z.B. einen halbkreisförmigen oder v-förmigen Umriss haben oder kann auch z.B. parallele Seitenflächen haben, die einen u-förmigen Umriss des Vorsprungs ergeben. Die zugeordnete Aufnahme oder Nut hat dann die dazu passende Form.

Weitere vorteilhafte Weiterbildungen der vorliegenden Erfindung sind den Unteransprüchen zu entnehmen.

Weitere Vorteile, vorteilhafte Weiterbildungen und Verwendungen der Erfindung sind der nachfolgenden Beschreibung von beispielhaften und bevorzugten Ausführungsformen der Erfindung in Verbindung mit den Zeichnungen zu entnehmen. Es zeigen:
- Fig. 1: eine schematische Schnittansicht einer Panzerglasscheibe einer bevorzugten Ausführungsform der Erfindung, in der eine mehrteilige Randverstärkung integriert ist;
- Fig. 2: eine schematische, herausgezeichnete Seitenansicht einer Randverstärkung in Explosionsansicht, die in der Ausführungsform von Fig. 1 verwendet werden kann und dreiteilig mit drei aneinandergereihten Verstärkungsgliedern ausgelegt ist;
- Fig. 3: eine vergrößerte Detailansicht von Fig. 2 gemäß einem Abschnitt, in dem zwei benachbarte Verstärkungsglieder der Randverstärkung gemäß Fig. 2 mit Federnut-System aneinander stoßen, wobei die beiden gezeigten Verstärkungsglieder nur teilweise ineinander greifen;
- Fig. 4: eine vergrößerte Detailansicht von Fig. 2 gemäß dem Abschnitt von Fig. 3, wobei die beiden gezeigten Verstärkungsglieder der Randverstärkung im Unterschied zur Fig. 3 jedoch vollständig im Eingriff sind;
- Fig. 5: eine schematische Seitenansicht einer heraus gezeichneten und zerlegten, weiteren Randverstärkung in einer Panzerglasscheibe mit einem Umriß, der unterschiedlich zur Panzerglasscheibe von Fig. 2 ist;
- Fig. 6: eine herausgelöste Seitenansicht einer zweiteiligen Randverstärkung, wiederum für eine Panzerglasscheibe mit einem anderen Scheibenumriß;
- Fig. 7: eine schematische Schnittansicht einer Panzerglasscheibe einer weiteren Ausführungsform der Erfindung, in der z.B. eine dreiteilige Randverstärkung ähnlich wie in Fig. 2 eingebaut sein kann;
- Fig. 8: eine schematische Ansicht einer beispielhafte Randverstärkung der Panzerglasscheibe der Erfindung von Fig. 7;
- Fig. 9: und Fig. 10 zugehörige Ansichten eines Details der Randverstärkung von Fig. 6, wobei Fig. 10 die Ansicht in Richtung des Pfeiles X in Fig. 9 und wobei Fig. 9 die Ansicht in Richtung des Pfeiles IX von Fig. 10 wiedergibt; und
- Fig. 11: und Fig. 12 zugehörige Ansichten einer Abwandlung der Ausführungsform von Fig. 9 und Fig. 10, wobei Fig. 12 die Ansicht in Richtung des Pfeiles XII in Fig. 11 und wobei Fig. 11 die Ansicht in Richtung des Pfeiles XI von Fig. 12 zeigt.

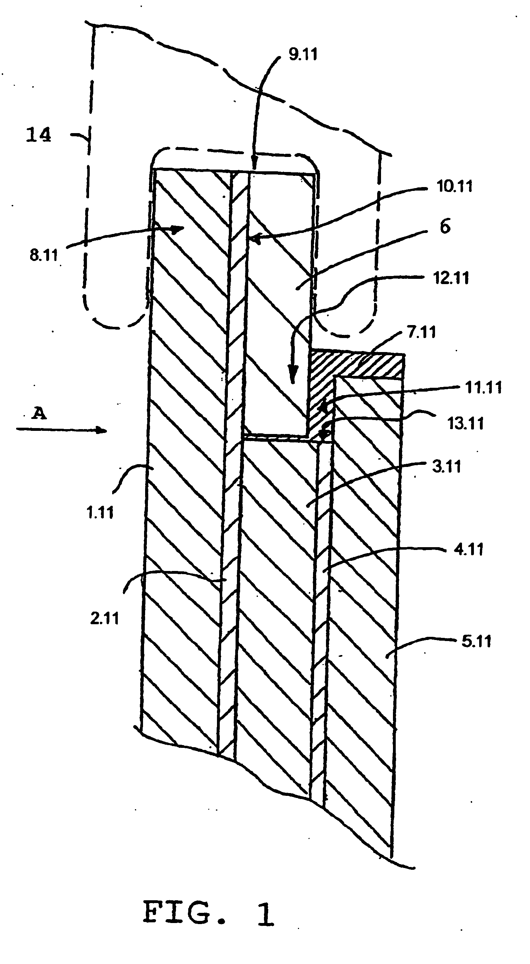

Die Fig. 1 zeigt eine Teilansicht einer bevorzugten Ausführungsform der Panzerglasscheibe der vorliegenden Erfindung als Verbundsicherheitsscheibe im Querschnitt mit einem mit gestrichelter Linie angedeuteten Fahrzeugrahmen 14. Nachfolgend wird die in der Figur 1 gezeigte Ausführungsform der Erfindung im Detail unter beispielhafter Bezugnahme auf die Verwendung der erfindungsgemäßen Panzerglasscheibe als versenkbare Seitenscheibe eines Kraftfahrzeugs erläutert.

Die erfindungsgemäße Panzerglasscheibe hat die sandwichartige bzw. laminatartig angeordnete Glasscheiben 1.11, 3.11 und 5.11, wobei die innere Glasscheibe 5.11 fahrzeuginnenseitig, die äußere Glasscheibe 1.11 fahrzeugaußenseitig und die mittlere Glasscheibe 3.11 zwischen der äußeren Glasscheibe 1.11 und der inneren Glasscheibe 5.11 angeordnet ist. Die Außenseite und damit die Beschussseite des Fahrzeugs ist durch den Pfeil A in der Figur 1 verdeutlicht, der auf die äußere Glasscheibe 1.11 zeigt. Zwischen der äußeren Glasscheibe 1.11 und der mittleren Glasscheibe 3.11 erstreckt sich eine Polyurethanschicht 2.11, die einen Verbund zwischen der äußeren Glasscheibe 1.11 und der mittleren Glasscheibe 3.11 ausbildet. Die Polyurethanschicht 2.11 bzw. Polyurethanfolie ist umriß- und flächendeckungsgleich zur äußeren Glasscheibe 1.11. Zwischen der mittleren Glasscheibe 3.11 und der inneren Glasscheibe 5.11 ist z.B. eine weitere Polyurethanschicht 4.11 oder eine Verbundschicht aus Polyvinylbutyral (PVB) ausgebildet, die wiederum einen festen Verbund zwischen der mittleren Glasscheibe 3.11 und der inneren Glasscheibe 5.11 herstellt. Die Polyurethanschicht 4.11 ist flächenmäßig deckungsgleich zur anstoßenden Oberfläche der mittleren Glasscheibe 3.11.

Die äußere Glasscheibe 1.11 ragt über die beiden anderen Glasscheiben 3.11 und 5.11 am Rand der gezeigten Panzerglasscheibe in einem Vorsprung 8.11 vor, wodurch stirnseitig bzw. randseitig an der Panzerglasscheibe eine Abstufung bzw. Stufe zu den anderen Glasscheiben 3 und 5 hin ausgebildet ist. Auf der im Bereich des Vorsprungs 8.11 nach innen weisenden Oberfläche 10.11 der Polyurethanschicht 2.11 ist eine Randverstärkung 6 eingebaut, die z.B. aus einem rostfreien Stahl bestehen kann, die Panzerglasscheibe rahmenförmig zumindest teilweise umschließt und mit der äußeren Glasscheibe 1.11 mittels der Polyurethanschicht 2.11 einen festen Verbund bildet.

An einer Stirnseite 9.11 der Panzerglasscheibe bzw. an der Stirnseite des Vorsprungs 8.11 sind die äußere Glasscheibe 1.11, die Polyurethanschicht 2.11 und die Randverstärkung 6 bündig zueinander. Die Randverstärkung 6 hat einen rechteckigen Querschnitt. Der Vorsprung 8.11, der somit durch die Randverstärkung 6, die äußere Glasscheibe 1.11 und die dazwischen liegenden Verbundschicht 2.11 aufgebaut ist, ist in einem Rahmen 14 des Kraftfahrzeugs gehaltert, der in der Figur 1 gestrichelt im Querschnitt angedeutet ist und im Dachbereich des Kraftfahrzeugs verläuft. In der in der Figur 1 gezeigten Stellung greift die Panzerglasscheibe in den Rahmen 14 mit dem Vorsprung 8.11 ein. Die gezeigt Seitenscheibe ist somit hochgefahren und das Fenster ist geschlossen.

Die innere Glasscheibe 5.11 ragt im Bereich der Abstufung der gezeigten Panzerglasscheibe über die mittlere Glasscheibe 3.11 vor, wodurch eine Vertiefung 12.11 bzw. Nut oder Aufnahme im Bereich zwischen der inneren Glasscheibe 5.11, der mittleren Glasscheibe 3.11, die stirnseitig bündig zur Polyurethanschicht 4.11 ist, und der durchgehenden Polyurethanschicht 2.11 ausgebildet ist. Die Randverstärkung 6 erstreckt sich in die Vertiefung 12.11 hinein und stößt in etwa stumpf an die Stirnseite der mittleren Glasscheibe 3.11 an. Stirnseitig ist die innere Glasscheibe 5.11 mit einer Versiegelung 7.11, z.B. aus Polyurethan, versehen, die zudem Hohlräume 11.11 innerhalb der Vertiefung 12.11 zwischen den angrenzenden Oberflächen der Randverstärkung 6, der mittleren Glasscheibe 3.11, der Polyurethanschicht 4.11, - bzw. dem Boden 13.11 der Vertiefung 12.11 -, der inneren Glasscheibe 5.11 und der Polyurethanschicht 2.11 innerhalb der Vertiefung 12.11 ausfüllt bzw. versiegelt.

Bei einer beispielhaften Panzerglasscheibe der Erfindung gemäß Fig. 1 betragen die Dicken der äußeren und der mittleren Glasscheibe 1.11, 3.11 jeweils 4 mm, die Dicke der inneren Glasscheibe 5.11 8 mm, die Dicken der Polyurethanschichten 2.11 und 4.11 jeweils 1 mm und die Dicke der Randverstärkung 6 aus Stahl etwa 2,5 mm. Auf der Innenfläche der inneren Glasscheibe 5.11 kann noch eine Schichtenfolge aus Polyurethan und Polykarbonat in dieser Reihenfolge ganzflächig aufgetragen sein, wobei die Dicke dieser zusätzlichen Polyurethanschicht etwa 1,9 mm und die Dicke der Polykarbonatscheibe etwa 2,5 mm beträgt.

Einer Abscherung des Vorsprungs 8.11 am Übergangsbereich zwischen der Randverstärkung 6 und der mittleren Glasscheibe 3.11 ist durch die überlappende Ausbildung der inneren Glasscheibe 5.11 bezüglich der ihr zugewandten Oberfläche der Randverstärkung 6 vorgebeugt.

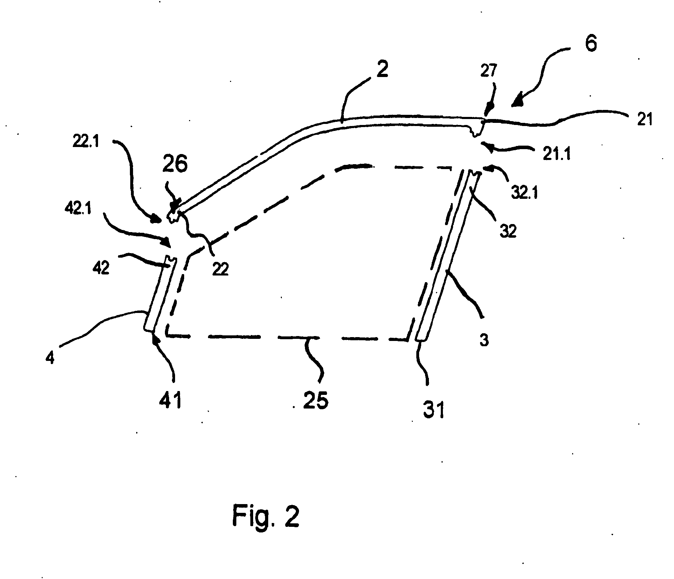

In der Fig. 2 ist schematisch eine bevorzugte Ausführungsform der Randverstärkung 6 der Panzerglasscheibe der Erfindung in der heraus gezeichneten Seitenansicht gezeigt. Die Randverstärkung 6 ist insgesamt aus drei aneinandergereihten Teilen oder Verstärkungsgliedern 2, 3 und 4 zusammengesetzt, die zur Verdeutlichung voneinander getrennt sind, aber zueinander wie vorgesehen beim Einbau in die Panzerglasscheibe von Fig. 1 ausgerichtet sind. Ein zugehöriger Umriß 25 der Panzerglasscheibe von Fig. 1 ist gestrichelt und schematisch in Fig. 2 eingezeichnet.

Die drei Verstärkungsglieder 2, 3, 4 der Randverstärkung 6 sind streifenförmig und relativ langgestreckt ausgebildet und haben jeweils den gleichen wesentlichen rechteckigen Querschnitt, wenn man den Querschnitt etwa z.B. auf mittiger Länge der Verstärkungsglieder 2, 3, 4 betrachtet, wie er auch in Fig. 1 gezeigt ist. Sind die drei gezeigten Verstärkungsglieder 2, 3 und 4 zusammengesetzt, ergibt sich die dreiseitige, rahmenförmige Randverstärkung 6 der Panzerglasscheibe. Die Verstärkungsglieder 2, 3 und 4 können zum Beispiel durch Ausstanzen aus einem Stanzblech hergestellt werden.

Das Verstärkungsglied 2 der Randverstärkung 6 ist wie Fig. 2 zu entnehmen ist, gekrümmt bzw. geknickt entsprechend dem Umriß 25 der Panzerglasscheibe ausgebildet und hat zwei abschließende Enden 21 und 22. Eine Kontur bzw. Mittenlinie des Verstärkungsglieds 2 folgt dabei z.B. der Oberkante der entsprechenden Panzerglasscheibe, in der das Verstärkungsglied 2 als Verbundteil der Verbundpanzerglasscheibe von Fig. 1 integriert ist.

An einem Ende 21 des Verstärkungsglieds 2 steht eine Feder 21.1 oder ein Vorsprung ab, wobei sich das Ende 21 über eine Ecke 27 der Randverstärkung 6 erstreckt. An dem anderen Ende 22 des Verstärkungsglieds 2 befindet sich eine weitere Feder 22.1 oder ein weiterer Vorsprung, die am Ende 22 hervorsteht, das sich wiederum um ein Eck 26 der Randverstärkung 6 erstreckt. Die Federn 21.1 und 22.1 sind jeweils konisch verjüngt oder haben jeweils parallel zueinander sich erstreckende Seitenflächen.

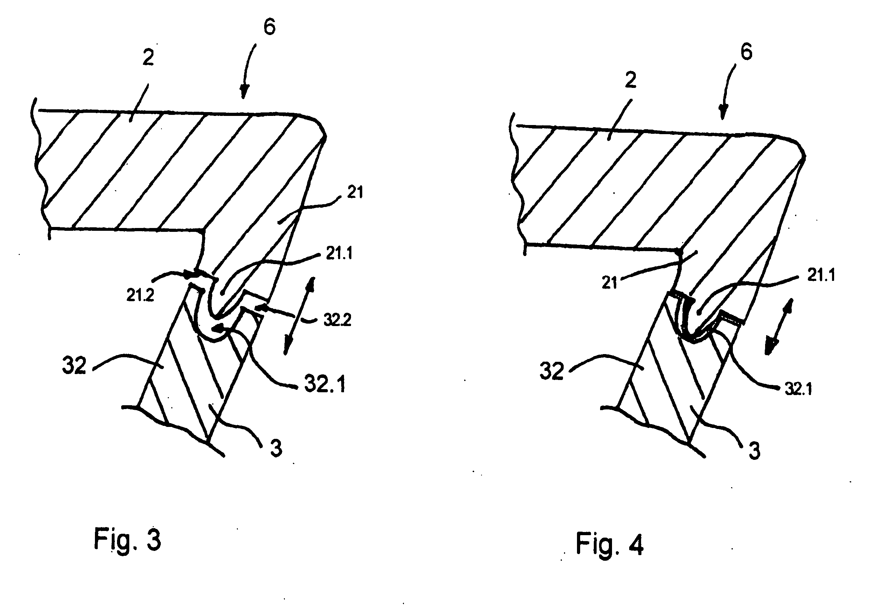

Das langgestreckte, gerade Verstärkungsglied 3 der Randverstärkung 6 ist an einem Ende 32 mit einer durchgehenden Nut 32.1 oder Aufnahme versehen, in die die Feder 21.1 des Verstärkungsglieds 2 einpaßt oder eingreifen kann. Sind das Verstärkungsglied 2 und das Verstärkungsglied 3 miteinander vollständig in Eingriff, wie in Fig. 4 gezeigt ist, greift die Feder 21.1 des Verstärkungsglieds 2 in die Nut 32.1 des Verstärkungsglieds 3 ein und ebene Anschlagflächen 21.2 des Endes 21 des Verstärkungsglieds 2 und ebene Anschlagflächen bzw. Stirnflächen 32.2 des Endes 32 des Verstärkungsglieds 3 schlagen aneinander an. Das andere Ende 31 des Verstärkungsglieds 3 ist als Blindstück ausgebildet bzw. endet stumpf. Die Nut 32.1 ist konisch aufgeweitet oder hat parallel zueinander sich erstrekkende Innenseitenflächen und ist paßgenau zu der zugeordneten Feder 21.1 des Verstärkungsglieds 2.

Das dritte Verstärkungsglied 4 der Randverstärkung 6 ist ebenfalls als streifenförmiges, langgestrecktes und gerades Teil ausgebildet und hat ein Ende 42, das dem Ende 22 des Verstärkungsglieds 2 zugewandt ist, und ein weiteres Ende 41, das als Blindstück oder Abschluß ausgebildet ist. Am Ende 42 hat das Verstärkungsglied 4 eine durchgehende Nut 42.1 mit benachbarten Anschlagflächen 42.2. Die Nut 42.1 des Endes 42 ist konisch oder mit planparallelen Seiteninnenflächen so ausgebildet, dass die Feder 22.1 am Ende 22 des Verstärkungsglieds 2 in die Nut 42.1 des Verstärkungsglieds 4 einpaßt, wenn die Randverstärkung 6 zusammengebaut ist. Wenn die Feder 22.1 vollständig in die Nut 42.1 eingreift, schlagen die ebenen Anschlagflächen des Endes 22 des Verstärkungsglieds 2 und die Anschlagflächen des Endes 42 des Verstärkungsglieds 4 aneinander an.

Eine Höhe der Feder 21.1 und entsprechend eine Tiefe der Nut 32.1, die einander zugeordnet sind, sind zum einen gleich und zum anderen derart aufeinander abgestimmt, dass die Feder 21.1 und die zugeordnete Nut 32.1 im Fall einer Relativbewegung zwischen dem Verstärkungsglied 2 und dem Verstärkungsglied 3 an den Enden 21 und 32 nicht außer Eingriff kommen. D.h., dass sich die Feder nicht vollständig aus der Nut heraus bewegen kann, wodurch erreicht wird, dass eine Ausrichtung der Verstärkungsglieder 2 und 3 zueinander trotz einer Relativbewegung aufgrund von z.B. einer Temperaturveränderung oder von mechanischen Spannungen in der Panzerglasscheibe, in der die Randverstärkung 6 integriert ist, aufrechterhalten werden kann. In Fig. 3 ist zur Verdeutlichung ein Zustand gezeigt, in dem die Feder 21.1 des Verstärkungsglieds 2 nur teilweise in die zugehörige Nut 32.1 des Verstärkungsglieds 3 der Randverstärkung 6 eingreift. In Fig. 4 ist dagegen wie gesagt ein vollständiges Ineinandergreifen von Feder 21.1 und Nut 32.1 gezeigt.

Wenn die Feder 22.1 vollständig in die entsprechende Nut 42.1 des Verstärkungsglieds 4 eingreift, schlagen die ebenen Anschlagflächen aneinander an, was zum Beispiel bei einer entsprechend hohen Umgebungstemperatur an der Panzerglasscheibe und einer entsprechend großen Ausdehnung der Randverstärkung 6 auftreten kann. Durch das Federnutsystem 22.1 und 42.1 der Verstärkungsglieder 2 und 4 kann selbst bei Relativbewegung der beiden Enden 22 und 42 zueinander eine vorgegebene Ausrichtung der beiden Verstärkungsglieder 2 und 4 aufrechterhalten werden, wobei auch an den Enden 22 und 42 die Höhe der Feder 22.1 bzw. die Tiefe der Nut 42.1 derart ausgelegt ist, dass die Feder 22.1 möglichst nicht vollständig außer Eingriff in die Nut 42.1 des Verstärkungsglieds 4 kommen kann.

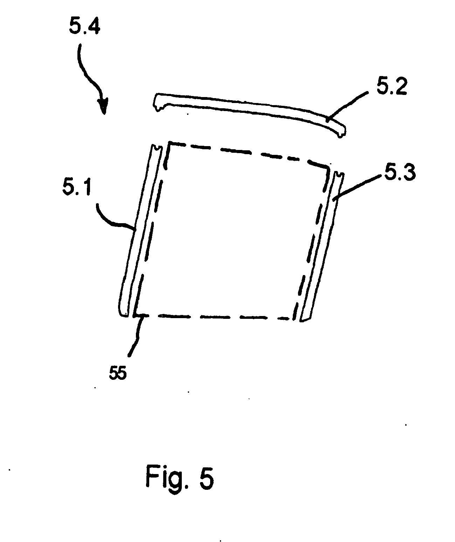

In Fig. 5 ist ein schematische Seitenansicht einer heraus gezeichneten und zerlegten Randverstärkung 5.4 für eine Panzerglasscheibe einer weiteren Ausführungsform der Erfindung mit einem Scheibenumriß 55 gezeigt, der wieder gestrichelt und schematisch in Fig. 5 eingezeichnet ist und der unterschiedlich zu dem Umriß 25 der Panzerglasscheibe von Fig. 2 ist.

Die drei Verstärkungsglieder 5.1, 5.2 und 5.3 der Randverstärkung 5.4 sind wiederum streifenförmig und relativ langgestreckt ausgebildet und haben jeweils den gleichen im Wesentlichen rechteckigen Querschnitt, wenn man den Querschnitt etwa z.B. auf mittiger Länge der Verstärkungsglieder betrachtet. Sind die drei gezeigten Verstärkungsglieder 5.1, 5.2 und 5.3 zusammengesetzt und in Reihe angeordnet sind, ergibt sich die dreiseitige, rahmenförmige Randverstärkung 5.4 der Panzerglasscheibe, die den Querschnitt von Fig. 1 haben kann.

Das Verstärkungsglied 5.2 der Randverstärkung 5.4 ist bügelförmig, leicht gekrümmt entsprechend dem Umriß 55 der Panzerglasscheibe ausgebildet und ist ansonsten ähnlich wie das Verstärkungsglied 2 von Fig. 2 aufgebaut. Das Verstärkungsglied 5.1 der Randverstärkung 5.4 ist gerade und langgetreckt ähnlich wie das Verstärkungsglied 3 von Fig. 2 ausgebildet. Auch das Verstärkungsglied 5.3 der Randverstärkung 5.4 ist gerade und langgetreckt ähnlich wie das Verstärkungsglied 3 von Fig. 2 ausgebildet.

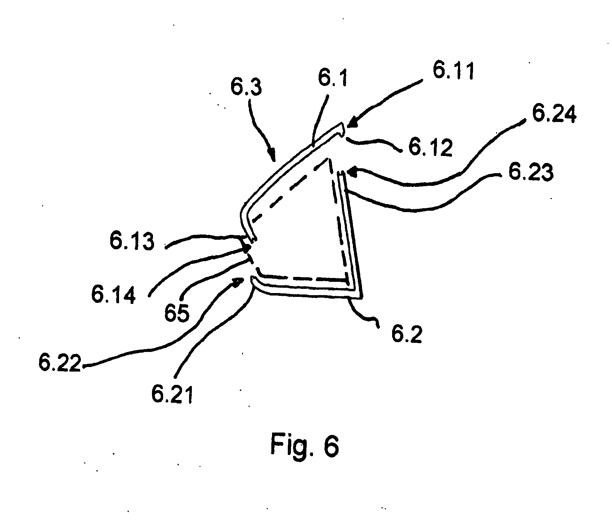

In Fig. 6 ist beispielhaft eine schematische Seitenansicht einer heraus gezeichneten und zerlegten Randverstärkung 6.3 für eine Panzerglasscheibe einer noch weiteren Ausführungsform der Erfindung mit einem Scheibenumriß 65 gezeigt, der wieder gestrichelt und schematisch in Fig. 6 eingezeichnet ist und der unterschiedlich zu dem Umriß 25 der Panzerglasscheibe von Fig. 2 oder dem Umriß 55 der Panzerglasscheibe von Fig. 5 ist.

Die beiden Verstärkungsglieder 6.1 und 6.2 der Randverstärkung 6.3 sind wiederum streifenförmig und relativ langgestreckt ausgebildet und haben jeweils den gleichen im Wesentlichen rechteckigen Querschnitt, wenn man den Querschnitt etwa z.B. auf mittiger Länge der Verstärkungsglieder betrachtet. Sind die beiden gezeigten Verstärkungsglieder 6.1 und 6.2 zusammengesetzt, ergibt sich die allseitig geschlossene, rahmenförmige Randverstärkung 6.3 der Panzerglasscheibe, die wiederum den in Fig. 1 gezeigten Querschnitt haben kann.

Das Verstärkungsglied 6.1 der Randverstärkung 6.3 ist im Wesentlichen hakenförmig gekrümmt entsprechend dem Umriß 65 der Panzerglasscheibe ausgebildet. An einem Ende 6.11 des Verstärkungsglieds 6.1 steht eine konische Feder 6.12 ab, wobei sich das Ende 6.11 über eine Ecke der Randverstärkung 6.3 erstreckt. An dem anderen Ende 6.13 des Verstärkungsglieds 6.1 befindet sich eine konische Nut 6.14.

Das zweite Verstärkungsglied 6.2 der Randverstärkung 6.3 ist im Wesentlichen zweischenklig und v-förmig entsprechend dem Umriß 65 der Panzerglasscheibe ausgebildet. An einem Ende 6.21 des Verstärkungsglieds 6.2 steht eine konische Feder 6.22 ab, wobei sich das Ende 6.21 hakenförmig gebogen über eine Ecke der Randverstärkung 6.3 erstreckt. Die Feder 6.22 des Verstärkungsglieds 6.2 paßt zu der Nut 6.14 des Verstärkungsglieds 6.1. An dem anderen Ende 6.23 des Verstärkungsglieds 6.2 befindet sich eine konische Nut 6.23, in die die Feder 6.12 des Verstärkungsglieds 6.1 einpaßt.

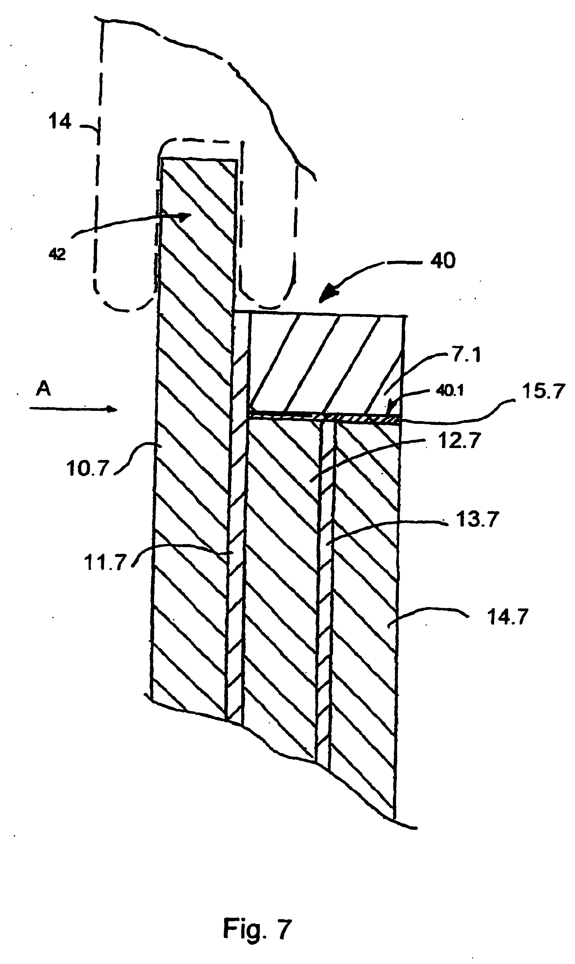

Fig. 7 zeigt eine schematische Schnittansicht einer Panzerglasscheibe einer weiteren, beispielhaften Ausführungsform der Erfindung, in der z.B. als eine Randverstärkung 7.1 eine angepaßte Randverstärkung 6 ähnlich wie in Fig. 2, eine angepaßte Randverstärkung 5.4 ähnlich wie in Fig. 5 oder eine eine angepaßte Randverstärkung 6.3 ähnlich wie in Fig. 6 vorgesehen sein kann.

Die Panzerglasscheibe von Fig. 7 ist insgesamt als Verbundscheibe aufgebaut und weist mehrere flächig und schichtweise aneinander befestigte Glasscheiben 10.7, 12.7 und 14.7 im Verbund auf. Die Glasscheiben 10.7 und 12.7 sind mittels einer PVB(Polyvinylbutyral)-Schicht 11.7 oder einer Polyurethanfolie miteinander verbunden. Die Glasscheiben 12.7 und 14.7 sind durch eine PVB-Schicht 13.7 miteinander verbunden. Die beschußseitig angeordnete Glasscheibe 10.7 (vgl. Pfeil A in Beschussrichtung zeigend in Fig. 7) ist jedoch länger als die anderen Glasscheiben und ragt über die zueinander bündigen Stirnflächen der anderen Glasscheiben 12.7 und 14.7 in einem äußere Randbereich der gezeigten erfindungsgemäßen Panzerglasscheibe hinaus. Hierdurch bildet die Glasscheibe 10.7 einen Vorsprung 42 bzw. eine Abstufung 40 der Panzerglasscheibe aus, wobei der Vorsprung 42 in einen Karosserierahmen oder Türrahmen 14 eines Kraftfahrzeugs eingreift.

In der Abstufung 40, also stirnseitig oberhalb der Glasscheiben 12.7 und 14.7, ist die Randverstärkung 7.1 in der Form z.B. eines streifenförmigen Stahlblechs mit einem rechteckigen Querschnitt angebracht, das sich entlang des gesamten abgestuften Randbereichs der gezeigten Panzerglasscheibe innerhalb der Abstufung 40 erstreckt. Die Randverstärkung 7.1 deckt den stirnseitigen Randbereich (40.1) oberhalb der Glasscheiben 12.7 und 14.7 vollständig oder zumindest teilweise innerhalb der Abstufung 40 nach innen an die äußere Glasscheibe 10.7 angrenzend ab. Die mehrteilige Randverstärkung 7.1 ist über die Verbundschicht 11.7 mit der Innenseite der Glasscheibe 10.7 eine Schicht 30 aus Polyurethan mit der Glasscheibe 10 und über eine Verbundschicht aus z.B. Polyurethan 15.7 mit den Stirnseiten der Glasscheiben 12.7 und 14.7 verbunden, die zueinander bündig sind.

An der Innenseite der Glasscheibe 14.7 und der Randverstärkung 7.1 zum Fahrgastraum hin kann ganzflächig noch eine Verbundschicht aus Polykarbonat an der Panzerglasscheibe von Fig. 7 angebracht sein. Zusätzlich kann auch die Innenseite der Glasscheibe 10.7, also der Vorsprung 42, und auch die gesamte Stirnseite der Abstufung 40, also die randseitige Stirnseite der Randverstärkung 7.1, mit einer Polykarbonatschicht oder einer anderen Passivierungsschicht auch aus mehreren Schichten, z.B. einer Schichtenfolge aus Polyurethan und Polykarbonat abgedeckt sein.

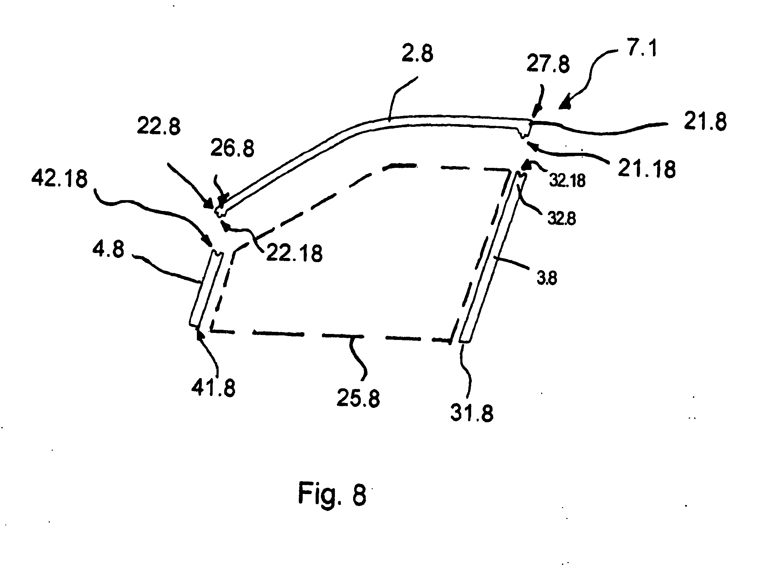

In der Fig. 8 ist schematisch eine beispielhafte Randverstärkung 7.1 der Panzerglasscheibe der Erfindung von Fig. 7 in der heraus gezeichneten Seitenansicht gezeigt. Die Randverstärkung 7.1 ist insgesamt aus drei Teilen oder Verstärkungsgliedern 2.8, 3.8 und 4.8 in Reihenanordnung zusammengesetzt, die zur Verdeutlichung voneinander getrennt sind, aber zueinander wie vorgesehen in die Panzerglasscheibe von Fig. 7 ausgerichtet sind. Ein zugehöriger Umriß 25.8 der Panzerglasscheibe von Fig. 7 ist gestrichelt und schematisch in Fig. 8 eingezeichnet.

Die drei Verstärkungsglieder 2.8, 3.8, 4.8 der Randverstärkung 6 sind streifenförmig und relativ langgestreckt ausgebildet und haben jeweils den gleichen wesentlichen rechteckigen Querschnitt, wenn man den Querschnitt etwa z.B. auf mittiger Länge der Verstärkungsglieder 2.8, 3.8, 4.8 betrachtet, wie er auch in Fig. 7 gezeigt ist. Sind die drei gezeigten Verstärkungsglieder 2.8, 3.8 und 4.8 zusammengesetzt und im gegenseitigen Eingriff, ergibt sich die dreiseitige, rahmenförmige Randverstärkung 7.1 der Panzerglasscheibe.

Das Verstärkungsglied 2.8 der Randverstärkung 7.1 ist wie Fig. 8 zu entnehmen ist, gekrümmt geknickt und bügelförmig entsprechend dem Umriß 25.8 der Panzerglasscheibe ausgebildet und hat zwei abschließende Enden 21.8 und 22.8.

An dem Ende 21.8 des Verstärkungsglieds 2.8 steht eine Feder 21.18 oder ein Vorsprung ab, wobei sich das Ende 21.8 über eine Ecke 27.8 der Randverstärkung 7.1 erstreckt. An dem anderen Ende 22.8 des Verstärkungsglieds 2.8 befindet sich eine weitere Feder 22.18 oder ein weiterer Vorsprung, die am Ende 22.8 hervorsteht, das sich wiederum über ein Eck 26.8 der Randverstärkung 7.1 erstreckt. Die Federn 21.18 und 22.18 sind z.B. jeweils konisch verjüngt.

Das langgestreckte, gerade Verstärkungsglied 3.8 der Randverstärkung 7.1 ist an einem Ende 32.8 mit einer durchgehenden Nut 32.18 oder Aufnahme versehen, in die die Feder 21.18 des Verstärkungsglieds 2.8 einpaßt oder eingreifen kann. Sind das Verstärkungsglied 2.8 und das Verstärkungsglied 3.8 miteinander in Eingriff, greift die Feder 21.18 des Verstärkungsglieds 2.8 in die Nut 32.18 des Verstärkungsglieds 3.8 nach Muster eines Feder/Nut-Systems ein. Das andere Ende 31.8 des Verstärkungsglieds 3.8 ist als Blindstück ausgebildet bzw. endet stumpf. Die Nut 32.18 ist z.B. konisch aufgeweitet und paßt in die Feder 21.18 des Verstärkungsglieds 2.8 ein.

Das dritte Verstärkungsglied 4.8 der Randverstärkung 7.1 ist ebenfalls als streifenförmiges, langgestrecktes und gerades Teil ausgebildet und hat ein Ende 42.8, das dem Ende 22.8 des Verstärkungsglieds 2.8 zugewandt ist, und ein weiteres Ende 41.8, das als Blindstück oder Abschluß ausgebildet ist. Am Ende 42.8 hat das Verstärkungsglied 4.8 eine durchgehende, z.B. konische Nut 42.18. Die Nut 42.18 des Endes 42.8 ist nun wieder so ausgebildet, dass die konische Feder 22.18 des Verstärkungsglieds 2.8 in die Nut 42.18 des Verstärkungsglieds 4.8 einpaßt, wenn die Randverstärkung 7.1 in der Verbundpanzerglasscheibe integriert ist.

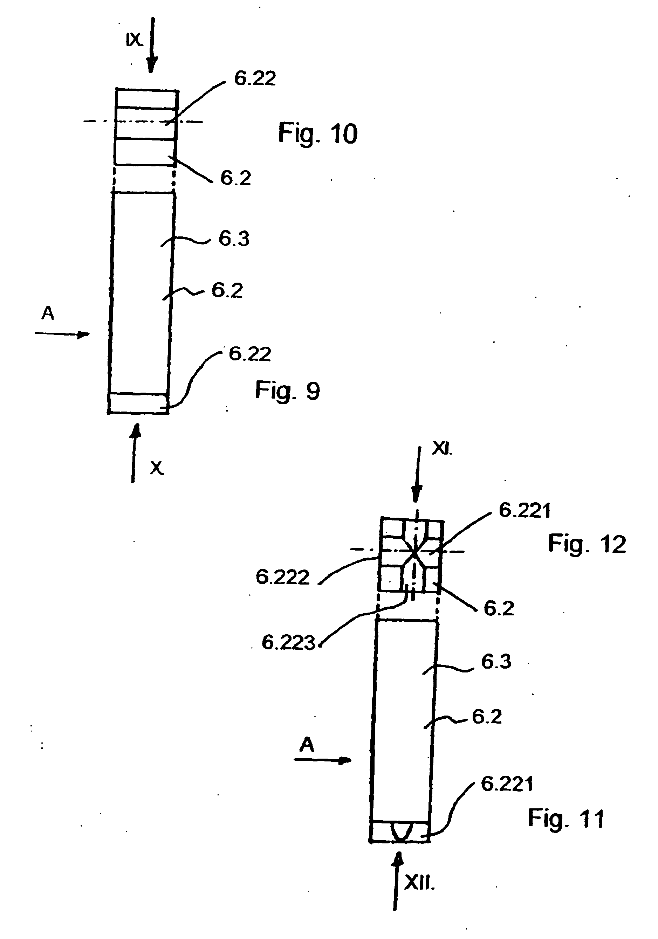

In Fig. 9 und Fig. 10 sind zur Verdeutlichung zugehörige Ansichten eines Details der Randverstärkung 6.3 von Fig. 6 (oder der Randverstärkungen 5.4, 6 oder 7.1) gezeigt, wobei Fig. 10 die Ansicht in Richtung des Pfeiles X in Fig. 9 und wobei Fig. 9 die Ansicht in Richtung des Pfeiles IX von Fig. 10 wiedergibt. Genauer ist in Fig. 9 und Fig. 10 die durchgehende, konische Feder 6.22 am Ende 6.21 des Verstärkungsglieds 6.2 schematisch heraus gezeichnet gezeigt, wobei der Pfeil A die Richtung eines auf die Panzerglasscheibe auftreffenden Schusses darstellen soll. Die Feder 6.22 ist hier einschenklig ausgelegt. Die zugehörige Nut 6.14 des Verstärkungsglieds 6.1 ist formmäßig an diese Feder 6.22 angepaßt, also z.B. durchgehend mit konisch aufgeweiteter Öffnung derart, dass die Feder 6.22 in die Nut 6.14 eingreifen und einpassen kann.

In Fig. 11 und Fig. 12 ist eine Abwandlung der Ausführungsform von Fig. 9 und Fig. 10 gezeigt, wobei Fig. 12 die Ansicht in Richtung des Pfeiles XII in Fig. 11 und wobei Fig. 11 die Ansicht in Richtung des Pfeiles XI von Fig. 12 wiedergibt. Genauer hat die Abwandlung in Fig. 11 und Fig. 12 eine durchgehende Feder 6.221 am Ende 6.21 des Verstärkungsglieds 6.2. Die Feder 6.221 bzw. der Vorsprung ist jedoch hier mit zwei Schenkeln 6.222 und 6.223 aufgebaut, die kreuzförmig und rechtwinklig zueinander angeordnet sind, um eine verbesserte Beschußfestigkeit der Randverstärkung 6.2 zu erhalten. Die zugehörige Nut 6.14 des Verstärkungsglieds 6.1 ist in der Abwandlung formmäßig an diese Feder 6.221 angepaßt, also mit zwei kreuzförmig sich schneidenden Nuten die formmäßig an die Feder 6.221 angepaßt sind. Feder und Nut können auch hier z.B. konisch sein.

## Patentansprüche

1. Panzerglasscheibe zur Verwendung in einem Kraftfahrzeug mit mehreren in einem Verbund schichtweise flächig miteinander verbundenen Scheiben (1.11, 3.11, 5.11; 10.7, 12.7, 14.7) und Schichten (2.11, 4.11; 11.7, 13.7) aus Glas, Keramik oder Kunststoff und mit einer Randverstärkung (6; 5.4; 6.3; 7.1), die sich an einem Umfang der Panzerglasscheibe erstreckt und mindestens zwei oder mehr Verstärkungsglieder (2, 3, 4; 5.1, 5.2, 5.3, 6.1, 6.2; 2.8, 3.8, 4.8) aufweist,
**dadurch gekennzeichnet,**
**dass** die Verstärkungsglieder (2, 3, 4; 5.1, 5.2, 5.3, 6.1, 6.2; 2.8, 3.8, 4.8) an ihren jeweiligen benachbarten Enden (21, 32; 22, 42; 6.13, 6.21; 21.8, 22.8, 32.8, 42.8) in Umfangsrichtung der Panzerglasscheibe in einem losen, gegenseitigen Eingriff sind.

2. Panzerglasscheibe nach Anspruch 1, **dadurch gekennzeichnet, dass** die Enden (21, 32) von jeweils zwei zueinander benachbarten und zusammengesetzten Verstärkungsgliedern (2, 3) der Randverstärkung (6) derart ineinander greifen, dass sie relativ zueinander beweglich sind und sich überlappen.

3. Panzerglasscheibe nach Anspruch 2, **dadurch gekennzeichnet, dass** von den benachbarten und zusammengesetzten Enden (21, 32) das Ende (32) des einen Verstärkungsglieds (3) mit mindestens einer Aufnahme (32.1) versehen ist und das Ende (21) des anderen Verstärkungsglieds (2) mit mindestens einem Vorsprung (21.1) versehen ist, der in die Aufnahme (32.1) paßt.

4. Panzerglasscheibe nach Anspruch 3, **dadurch gekennzeichnet, dass** die Aufnahme (32.1) oder Aufnahmen und auch der Vorsprung (21.1) oder die Vorsprünge zueinander passend konisch ausgebildet sind.

5. Panzerglasscheibe nach einem der vorstehenden Ansprüche, **dadurch gekennzeichnet, dass** die Enden (6.11, 6.23) von jeweils zwei zueinander benachbarten und zusammengesetzten Verstärkungsgliedern (6.1, 6.2) nach Art eines Feder-Nut-Systems ineinander greifen, wobei das Ende (6.23) des einen Verstärkungsglieds (6.2) mit mindestens einer Nut (6.24) versehen ist und das Ende (6.11) des anderen Verstärkungsglieds (6.1) mit mindestens einer Feder (6.12) versehen ist, die in die Nut (6.24) einpaßt.

6. Panzerglasscheibe nach einem der vorstehenden Ansprüche, **dadurch gekennzeichnet, dass** ein Verstärkungsglied der Randverstärkung an jedem seiner Enden mit mindestens einem Vorsprung oder mindestens einer Feder und/oder mit mindestens einer Aufnahme oder mindestens einer Nut versehen ist.

7. Panzerglasscheibe nach einem der Ansprüche 3 bis 5, **dadurch gekennzeichnet, dass** ein Verstärkungsglied (6.1) der Randverstärkung (6.3) an einem Ende (6.11) mit einem Vorsprung oder einer Feder (6.12) und an dem anderen Ende mit einer Aufnahme oder einer Nut (6.14) versehen ist.

8. Panzerglasscheibe nach einem der Ansprüche 3 bis 5, **dadurch gekennzeichnet, dass** ein Verstärkungsglied (3, 4) der Randverstärkung (6) an einem Ende (32, 42) mit mindestens einem Vorsprung oder mindestens einer Feder und/oder mit mindestens einer Aufnahme oder mindestens einer Nut (32.1, 42.1) versehen ist und an dem anderen Ende als Blindstück (31, 41) ausgebildet ist.

9. Panzerglasscheibe nach einem der vorstehenden Ansprüche, **dadurch gekennzeichnet, dass** die ineinandergreifenden Enden (21, 31) von zwei benachbarten Verstärkungsgliedern (2, 3) der Randverstärkung (6) sich einander zugewandte, freiliegende, ebene Anschlagflächen (21.2, 32.2) haben, die sich parallel zu einer Querschnittsfläche der Verstärkungsglieder (2, 3) oder der Randverstärkung (6) erstrecken und aneinander anschlagen, wenn die beiden benachbarten Verstärkungsglieder (2, 3) vollständig in Eingriff sind.

10. Panzerglasscheibe nach einem der vorstehenden Ansprüche, **dadurch gekennzeichnet, dass** die Verstärkungsglieder (2, 3, 4) der Randverstärkung (6, 5.4; 6.3; 7.1) aus einem ballistischen Material, insbesondere aus rostfreiem Stahl, und/oder einem Keramikmaterial, insbesondere AlON, bestehen.

11. Panzerglasscheibe nach einem der vorstehenden Ansprüche, **dadurch gekennzeichnet, dass** die Randverstärkung (6) oder jedes Verstärkungsglied (2, 3, 4) der Randverstärkung im Wesentlichen einen rechteckigen, einen winkelförmigen oder L-förmigen oder einen T-förmigen Querschnitt hat.

12. Panzerglasscheibe nach einem der vorstehenden Ansprüche, **gekennzeichnet durch** mindestens einen randseitigen Vorsprung (8.11; 42), der **durch** mindestens eine Glasscheibe (1.11; 10.7), die über die anderen Glasscheiben (3.11, 5.11; 12.7, 14.7) hervorsteht, und/oder mindestens eine Verbundschicht (2.11) aus Kunststoff und/oder die Randverstärkung (6) ausgebildet ist.

13. Panzerglasscheibe nach einem der vorstehenden Ansprüche, **dadurch gekennzeichnet, dass** die Randverstärkung (7.1) auf einer randseitigen Stirnseite (40.1) oder an einer Umfangsfläche der Panzerglasscheibe befestigt ist und die Stirnseite oder Umfangsfläche zumindest teilweise oder vollständig abdeckt.

14. Panzerglasscheibe nach Anspruch 12, **gekennzeichnet durch** mehrere schichtweise angeordneten Glasscheiben (1.11, 3.11, 5.11) mit dazwischenliegenden Verbundschichten (2.11, 4.11), wobei mindestens eine äußere, erste Glasscheibe (1.11), eine zu der äußeren Glasscheibe nach innen nächstliegende, zweite Glasscheibe (3.11) und eine zur zweiten Glasscheibe nach innen nächstliegende, dritte Glasscheibe (5.11) vorgesehen sind, wobei die äußere, erste Glasscheibe (1.11) am Rand der Panzerglasscheibe über die zweite und dritte Glasscheibe (3.11, 5.11) vorragt und die dritte Glasscheibe (5.11) am Rand der Panzerglasscheibe über die zweite Glasscheibe (3.11) vorragt, um zwischen der äußeren, ersten Glasscheibe (1.11) und der dritten Glasscheibe (5.11) eine Vertiefung (12.11) auszubilden, wobei sich die Randverstärkung (6) in die Vertiefung (12.11) derart hinein erstreckt, daß die dritte Glasscheibe (5.11) die Randverstärkung (6) überlappt und die zweite Glasscheibe (3.11) und die Randverstärkung (6) stirnseitig zueinander benachbart sind.

15. Panzerglasscheibe nach einem der vorstehenden Ansprüche, **dadurch gekennzeichnet, dass** eine Feder (6.221) oder ein Vorsprung am Ende eines Verstärkungslieds (6.2) der Randverstärkung (6.3) kreuzförmig ausgebildet ist oder dass eine Nut oder eine Aufnahme am Ende eines Verstärkungslieds der Randverstärkung kreuzförmig ausgebildet ist.

## Claims

1. Bullet proof window for use in a motor vehicle, comprising several panes (1.11, 3.11, 5.11; 10.7, 12.7, 14.7) and layers (2.11, 4.11; 11.7, 13.7) connected with each other into a layered laminate and made of glass, ceramic, or plastic, and an edge reinforcement (6; 5.4; 6.3; 7.1) extending on a periphery of the bullet proof window and comprising at least two or more reinforcing elements (2, 3, 4, 5.1, 5.2, 5.3, 6.1, 6.2; 2.8, 3.8, 4.8),
**characterized in that** the reinforcing elements (2, 3, 4; 5.1, 5.2, 5.3, 6.1, 6.2; 2.8, 3.8, 4.8) are in a loose mutual engagement at respective adjacent ends (21, 32; 22, 42; 6.13, 6.21; 21.8, 22.8, 32.8, 42.8) thereof in a circumferential direction of the bullet proof window.

2. Bullet proof window according to claim 1, **characterized in that** the ends (21, 32) of respective two reinforcing elements (2, 3) of the edge reinforcement (6) are adjacent to each other, assembled, and engaged into each other such that they are moveable relative to each other and overlap each other.

3. Bullet proof window according to claim 2, **characterized in that**, within adjacent and assembled ends (21, 32), the end (32) of the one reinforcing element (3) is provided with at least one recess (32.1) and the end (21) of the other reinforcing element (2) is provided with at least one projection (21.1) fitting into the recess (32.1).

4. Bullet proof window according to claim 3, **characterized in that** the recess (32.1) or recesses and also the projection (21.1) or projections are tapered to fit into each other.

5. Bullet proof window according to one of the preceding claims, **characterized in that** the ends (6.11, 6.23) of respective two adjacent and assembled reinforcing elements (6.1, 6.2) are engaged into each other like a tongue-and-groove-system wherein the end (6.23) of the one reinforcing element (6.2) is provided with at least one groove (6.24) and the end (6.11) of the other reinforcing element (6.1) is provided with at least one tongue (6.12) fitting into the groove (6.24).

6. Bullet proof window according to one of the preceding claims, **characterized in that** a reinforcing element of the edge reinforcement is provided with at least one projection or tongue and/or with at least one recess or groove.

7. Bullet proof window according to one of the claims 3 to 5, **characterized in that** a reinforcing element (6.1) of the edge reinforcement (6.3) is provided with a projection or tongue (6.12) on one end (6.11) an with a recess or a groove (6.14) on the other end.

8. Bullet proof window according to one of the claims 3 to 5, **characterized in that** a reinforcing element (3, 4) of the edge reinforcement (6) is provided with at least one projection or tongue and/or with at least one recess or groove (32.1, 42.1) on the one end (32, 42) and it is formed as a dummy part (31, 41) at the other end.

9. Bullet proof window according to one of the preceding claims, **characterized in that** the ends (21, 31) engaged into each other of two adjacent reinforcing elements (2, 3) of the edge reinforcement (6) comprise exposed and plane abutting surfaces (21.2, 32.2) directed to each other which extend parallel to a section area of the reinforcing elements (2, 3) or of the edge reinforcement (6) and which abut each other if both reinforcing elements (2, 3) are engaged completely.

10. Bullet proof window according to one of the preceding claims, **characterized in that** the reinforcing elements (2, 3, 4) of the edge reinforcement (6, 5.4; 6.3; 7.1) are made of a bullet proof material, particularly stainless steel, and/or a ceramic material, particularly AlON.

11. Bullet proof window according to one of the preceding claims, **characterized in that** the edge reinforcement (6) or each reinforcing element (2, 3, 4) of the edge reinforcement comprises substantially a rectangular, angled or L-shaped, or T-shaped section.

12. Bullet proof window according to one of the preceding claims, **characterized by** at least one projection (8.11; 42) that is formed by at least one glass pane (1.11; 10.7) projecting the other glass panes (3.11, 5.11; 12.7, 14.7) and/or by at least one bonding layer (2.11) made of plastic and/or by the edge reinforcement (6) at the edge.

13. Bullet proof window according to one of the preceding claims, **characterized in that** the edge reinforcement (7.1) is fixed to a face (40.1) at the edge or to a circumferential surface of the bullet proof window and that the edge reinforcement covers the face or circumferential surface at least partly or completely.

14. Bullet proof window according to one of the preceding claims, **characterized by** several layered glass panes (1.11, 3.11, 5.11) comprising bonding layers (2.11, 4.11) there between, wherein at least one outer first glass pane (1.11), a second glass pane (3.11) arranged inward next to the outer glass pane, and a third glass pane (5.11) arranged inward next to the second glass pane are provided, the outer first glass pane (1.11) projects the second and third glass panes (3.11, 5.11) at the edge of the bullet proof window and the third glass pane (5.11) projects the second glass pane (3.11) at the edge of the bullet proof window to form a recess (12.11) between the outer first glass pane (1.11) and the third glass pane (5.11), the edge reinforcement (6) extends into the recess (12.11) so that the third glass pane (5.11) overlaps the edge reinforcement (6) and so that the second glass pane (3.11) and the edge reinforcement (6) are adjacent at their faces.

15. Bullet proof window according to one of the preceding claims, **characterized in that** a tongue (6.221) or a projection are formed like a cross at the end of a reinforcing element (6.2) of the edge reinforcement (6.3) or that a groove or recess are formed like a cross at the end of a reinforcing element of the edge reinforcement.

## Revendications

1. Vitre pare-balles à utiliser dans un véhicule automobile, comportant plusieurs vitres reliées face-à-face les unes aux autres en se superposant pour obtenir un composite (1.11, 3.11, 5.11 ; 10.7, 12.7, 14.7) et plusieurs couches (2.11, 4.11 ; 11.7, 13.7) en verre, en céramique ou en matière synthétique, et comprenant un renforcement marginal (6 ; 5.4 ; 6.3 ; 7.1) qui s'étend sur la périphérie de la vitre pare-balles et qui présente au moins deux membres de renforcement ou plus (2, 3, 4 ; 5.1, 5.2, 5.3, 6.1, 6.2 ; 2.8, 3.8, 4.8) **caractérisée en ce que** les membres de renforcement (2, 3, 4 ; 5.1, 5.2, 5.3, 6.1, 6.2 ; 2.8, 3.8, 4.8) viennent s'engrener réciproquement de manière lâche à leurs extrémités voisines respectives (21, 32 ; 22, 42 ; 6.13, 6.21 ; 21.8, 22.8, 32.8, 42.8) dans la direction périphérique de la vitre pare-balles.

2. Vitre pare-balles selon la revendication 1, **caractérisée en ce que** les extrémités (21, 32) de respectivement deux membres de renforcement (2, 3) assemblés et voisins l'un de l'autre du renforcement marginal (6) viennent s'engrener l'une dans l'autre de telle sorte qu'elles sont mobiles l'un par rapport à l'autre et de telle sorte qu'elles se chevauchent.

3. Vitre pare-balles selon la revendication 2, **caractérisée en ce que**, parmi les extrémités assemblées et voisines (21, 32), l'extrémité (32) du premier membre de renforcement (3) est munie d'au moins un évidement (32.1) et l'extrémité (21) de l'autre membre de renforcement (2) est munie d'au moins une saillie (21.1) qui vient s'insérer dans l'évidement (32.1).

4. Vitre pare-balles selon la revendication 3, **caractérisée en ce que** l'évidement (32.1) ou les évidements et également la saillie (21.1) ou les saillies sont réalisés avec une configuration conique pour correspondre les uns avec les autres.

5. Vitre pare-balles selon l'une quelconque des revendications précédentes, **caractérisée en ce que** les extrémités (6.11, 6.23) de respectivement deux membres de renforcement assemblés et voisins l'un de l'autre (6.1, 6.2) viennent s'insérer l'une dans l'autre à la manière d'un système à ressort-rainure, l'extrémité (6.23) du premier membre de renforcement (6.2) étant munie d'au moins une rainure (6.24) et l'extrémité (6.11) de l'autre membre de renforcement (6.1) étant munie d'au moins un ressort (6.12) qui vient s'insérer dans la rainure (6.24).

6. Vitre pare-balles selon l'une quelconque des revendications précédentes, **caractérisée en ce qu'**un élément de renforcement du renforcement marginal est muni à chacune de ses extrémités d'au moins une saillie ou d'au moins un ressort et/ou d'au moins un évidement ou d'au moins une rainure.

7. Vitre pare-balles selon l'une quelconque des revendications 3 à 5, **caractérisée en ce qu'**un élément de renforcement (6.1) du renforcement marginal (6.3) est muni à une extrémité (6.11) d'une saillie ou d'un ressort (6.12) et à l'autre extrémité d'un évidement ou d'une rainure (6.14).

8. Vitre pare-balles selon l'une quelconque des revendications 3 à 5, **caractérisée en ce qu'**un élément de renforcement (3, 4) du renforcement marginal (6) est muni à une extrémité (32, 42) d'au moins une saillie ou d'au moins un ressort et/ou d'au moins un évidement ou d'au moins une rainure (32.1, 42.1) et est réalisé à son autre extrémité sous la forme d'une pièce factice (31, 41).

9. Vitre pare-balles selon l'une quelconque des revendications précédentes, **caractérisée en ce que** les extrémités (21, 31) venant s'engrener l'une dans l'autre, de deux membres de renforcement voisins (2, 3) du renforcement marginal (6), possèdent des surfaces de butée planes, exposées, tournées l'une vers l'autre (21.2, 32.2), qui s'étendent parallèlement à une surface transversale des membres de renforcement (2, 3) ou du renforcement marginal (6), et qui viennent buter l'une contre l'autre lorsque les deux membres de renforcement voisins (2, 3) sont complètement engrenés l'un dans l'autre.

10. Vitre pare-balles selon l'une quelconque des revendications précédentes, **caractérisée en ce que** les éléments de renforcement (2, 3, 4) du renforcement marginal (6, 5.4 ; 6.3 ; 7.1) sont constitués d'un matériau balistique, en particulier de l'acier inoxydable, et/ou d'une matière céramique, en particulier du AION.

11. Vitre pare-balles selon l'une quelconque des revendications précédentes, **caractérisée en ce que** le renforcement marginal (6) ou chaque élément de renforcement (2, 3, 4) du renforcement marginal possède essentiellement une section transversale rectangulaire, une section transversale angulaire ou bien une section transversale en forme de L ou en forme de T.

12. Vitre pare-balles selon l'une quelconque des revendications précédentes, **caractérisée par** au moins une saillie marginale (8.11 ; 42) qui est formée par au moins une vitre (1.11 ; 10.7) qui fait saillie au-delà des autres vitres (3.11, 5.11 ; 12.7, 14.7), et/ou par au moins une couche composite (2.11) constituée d'une matière synthétique et/ou par le renforcement marginal (6).

13. Vitre pare-balles selon l'une quelconque des revendications précédentes, **caractérisée en ce que** le renforcement marginal (7.1) est fixé sur un côté frontal marginal (40.1) ou contre une surface périphérique de la vitre pare-balles et recouvre au moins en partie ou complètement le côté frontal ou la surface périphérique.

14. Vitre pare-balles selon la revendication 12, **caractérisée par** plusieurs vitres (1.11, 3.11, 5.11) disposées les unes par-dessus les autres entre lesquelles viennent s'intercaler des couches composites (2.11, 4.11), dans laquelle on prévoit au moins une première vitre externe (1.11), une deuxième vitre (3.11) la plus proche vers l'intérieur par rapport à la vitre externe et une troisième vitre (5.11) la plus proche vers l'intérieur par rapport à la deuxième vitre, la première vitre externe (1.11) faisant saillie, au bord de la vitre pare-balles au-delà de la deuxième et de la troisième vitre (3.11, 5.11) et la troisième vitre (3.11) faisant saillie, au bord de la vitre pare-balles au-delà de la deuxième vitre (3.11), afin d'obtenir un renfoncement (12.11) entre la première vitre externe (1.11) et la troisième vitre (5.11), le renforcement marginal (6) s'étendant jusque dans le renfoncement (12.11) de telle sorte que la troisième vitre (5.11) vient se superposer au renforcement marginal (6) et de telle sorte que la deuxième vitre (3.11) et le renforcement marginal (6) sont voisins l'un de l'autre avec leur côté frontal.

15. Vitre pare-balles selon l'une quelconque des revendications précédentes, **caractérisée en ce qu'**un ressort (6.221) ou une saillie est réalisé en forme de croix à l'extrémité d'un membre de renforcement (6.2) du renforcement marginal (6.3) ou bien **en ce qu'**une rainure ou un évidement est réalisé en forme de croix à l'extrémité d'un membre de renforcement du renforcement marginal.
